# EUROPEAN PATENT APPLICATION

(11) **EP 2 683 136 A1**
(43) Date of publication of application: **08.01.2014**
(21) Application number: 12174700.0
(22) Date of filing: 03.07.2012
(51) Int. Cl.: H04L 29/08, H04W 28/02

(54) **Methods And Devices For Facilitating A Download Session**

(71) Applicant: BlackBerry Limited, Waterloo, ON N2K 0A7 (CA)
(72) Inventor: Parry, Thomas Owen, Waterloo, Ontario N2L 3W8 (CA); Quin, Spencer Leavitt George, Waterloo, Ontario N2L 3W8 (CA); Feldman, Andrey, Waterloo, Ontario N2L 3W8 (CA)
(74) Representative: Patel, Binesh

(57) **Abstract**

Methods and devices for facilitating download of content, particularly data, from a third-party server using an administration server. The administration server receives a request from an electronic device to download content from the third-party server over a wireless network connection. It then generates an authorization message in response to the request based on applying one or more pre-determined rules to the request, wherein the one or more pre-determined rules are based on an estimate of wireless network traffic load and sends the authorization message to the electronic device indicating whether the electronic device is authorized to establish a download session with the third-party server.

## Description

### TECHNICAL FIELD

The present application relates to bandwidth management, and more particularly to methods and electronic devices for facilitating download sessions between electronic devices and third-party servers.

### BACKGROUND

Electronic devices such as mobile phones, smart phones, PDAs (personal digital assistants), tablets, etc. are often equipped with various types of applications. The applications stored on the electronic devices may be added, upgraded, and modified from time-to-time. For example, an updated version of an application or a new application with specific functions and features may be loaded on to the electronic device.

Applications may be loaded on to an electronic device from various sources. For example, applications may be loaded on to an electronic device from servers, other electronic devices, etc. Applications being loaded from servers or other electronic devices may typically require a network connection (for example, a wireless network connection) between the electronic device and the servers or other electronic devices to download the application on to the electronic device.

Network connections are often susceptible to problems of network congestion (*i.e.* when a connection is carrying so much data that its quality of service deteriorates) that may affect application downloads between the electronic device and servers or other electronic devices. As a result, the download process may slow down or be disrupted, and a user may have to re-start the download process. This provides for a poor user experience.

This issue is particularly problematic with wireless networks, particularly wireless wide area networks, *i.e.* cellular networks, where congestion can occur more easily. In many cases the application developer or manager and/or the electronic device OEM may have no access to real-time information regarding the cellular network being used by an electronic device. In addition, in many cases the application developer or manager and/or the OEM may outsource the distribution of an application or application upgrade to a third-party that provides the server and network infrastructure for downloading applications or upgrades. An example of such a third-party is Akamai Technologies. In that situation, the application developer or manager and/or the OEM has no control over the third-party server that electronic devices will contact in an attempt to download an application or an upgrade. If the cellular network has capacity or quality-of-service problems, then the download from the third-party server may fail resulting in a poor user experience.

### BRIEF SUMMARY

In one aspect, the present application discloses a method implemented by a processor of a server. The method includes receiving a request from an electronic device to download content from a third-party server over a wireless network connection; generating an authorization message in response to the request based on applying one or more pre-determined rules to the request, wherein the one or more pre-determined rules are based on an estimate of wireless network traffic load; and sending the authorization message to the electronic device indicating whether the electronic device is authorized to establish a download session with the third-party server.

In another aspect, the present application describes a server including one or more processors, memory, a communication subsystem, and an authorization module executable by the one or more processors to configure the one or more processors to: receive a request from an electronic device to download content from a third-party server over a wireless network connection; generate an authorization message in response to the request based on applying one or more pre-determined rules to the request, wherein the one or more pre-determined rules are based on an estimate of wireless network traffic load; and send the authorization message to the electronic device indicating whether the electronic device is authorized to establish a download session with the third-party server.

In yet another aspect, the present application describes a method implemented by a processor of an electronic device. The method includes sending a request to an administration server over a wireless network connection to download a software update from a third-party server; receiving an authorization message from the administration server, the authorization message being generated based on applying one or more pre-determined rules to the request, wherein the one or more pre-determined rules are based on an estimate by the administration server of wireless network load; determining that the authorization message permits a download session with the third-party server; and initiating the download session directly with the third-party server.

Other example embodiments of the present disclosure will be apparent to those of ordinary skill in the art from a review of the following detailed description in conjunction with the drawings.

Example embodiments of the present disclosure are not limited to any particular operating system, mobile device architecture, server architecture or computer programming language.

### BRIEF DESCRIPTION OF THE DRAWINGS

Reference will now be made, by way of example, to the accompanying drawings which show example embodiments of the present disclosure, and in which:

FIG. 1 is a block diagram illustrating an example operating environment in accordance with example embodiments of the present disclosure;

FIG. 2 is a block diagram illustrating an example server in accordance with example embodiments of the present disclosure;

FIG. 3 is a block diagram illustrating an example electronic device in accordance with example embodiments of the present disclosure;

FIG. 4 is a flowchart illustrating an example method of facilitating a download session between an electronic device and a server in accordance with example embodiments of the present disclosure; and

FIG. 5 is a flowchart illustrating an example method of initiating a download session between an electronic device and a third-party server in accordance with example embodiments of the present disclosure.

Like reference numerals are used in the drawings to denote like elements and features.

### DETAILED DESCRIPTION

### System Overview

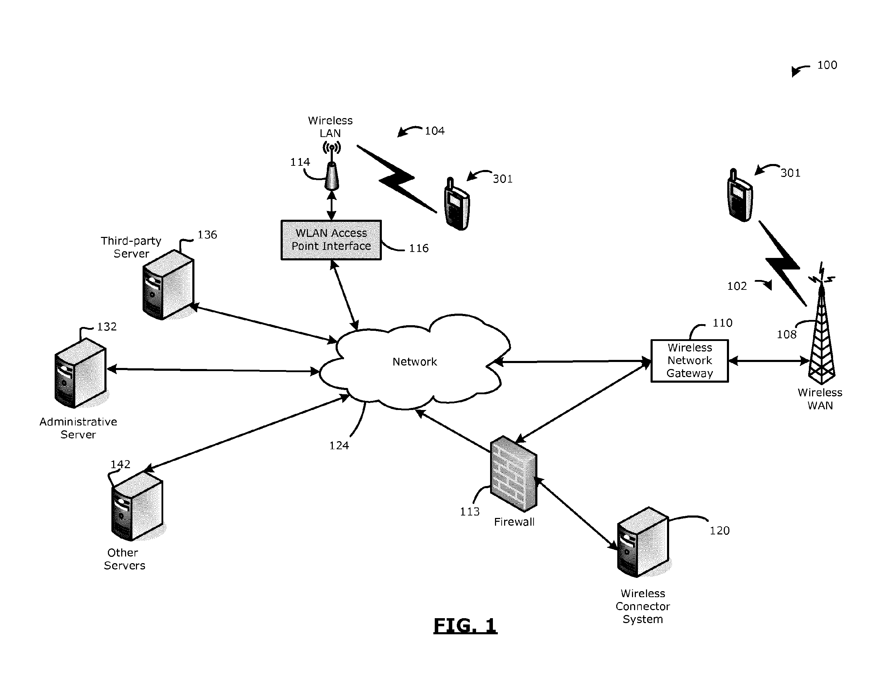

Reference is first made to FIG. 1, which shows in block diagram form a communication system 100 in which example embodiments of the present disclosure can be applied. The communication system 100 includes a number of electronic devices 301 which may be connected to the remainder of the system 100 in any of several different ways. In the example embodiment illustrated, the electronic devices 301 are mobile communication devices. That is, the electronic devices 301 are configured to communicate with other electronic devices, servers and/or systems (*i.e*. they are "communication" devices) and the electronic devices 301 are portable and may be easily moved between different physical locations (*i.e*. they are "mobile" devices). However, in other example embodiments, the electronic devices 301 may not be portable (*i.e*. may not be "mobile" devices).

Several instances of electronic devices 301 are depicted in FIG. 1 employing different example ways of connecting to the system 100. The electronic devices 301 are connected to a communication network such as a wireless network 101 which may include one or more of a Wireless Wide Area Network (WWAN) 102 and a Wireless Local Area Network (WLAN) 104 or other suitable network arrangements. In some example embodiments, the electronic devices 301 are configured to communicate over both the WWAN 102 and WLAN 104, and to roam between these networks. In some example embodiments, the wireless network 101 may include multiple WWANs 102 and WLANs 104.

The WWAN 102 may be implemented as any suitable wireless access network technology. By way of example but not limitation, the WWAN 102 may be implemented as a wireless network that includes a number of transceiver base stations 108 (one of which is shown in FIG. 1) where each of the transceiver base stations 108 provides wireless Radio Frequency (RF) coverage to a corresponding area or cell.

The transceiver base stations 108 facilitate wireless communication for electronic devices 301. The transceiver base stations 108 may host one or more mobile network service providers (for example, Rogers Wireless, Telus Mobility, Verizon Wireless, AT&T Mobility, *etc.*) that provide subscription packages to users of the electronic devices 301. The transceiver base stations 108 may also serve various wireless network types, including one or more of: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSDPA (High-Speed Downlink Packet Access), LTE (3GPP Long Term Evolution), IEEE 802.16e (also referred to as Worldwide Interoperability for Microwave Access or "WiMAX), or various other network standards.

A transceiver base station 108 typically supports a number of frequency bands within a wireless network type. For example, under the GSM network, a transceiver base station 108 may support four frequency bands (850/900/1800/1900 MHz) for compatibility with the electronic devices 301. A transceiver base station 108 also includes a number of channels within frequency bands to allow for communication with an electronic device 301. In some implementations, the channels including uplink channels, downlink channels, paging channels, *etc.* A transceiver base station 108 assigns an available channel (or time slot on a channel) within a frequency band in response to receiving a communication signal from an electronic device 301 requesting to establish a communication link with the base station 108. Accordingly, the capacity of a transceiver base station 108 may be limited by the number of available channels and the number of electronic devices 301 simultaneously communicating with the base station 108.

As noted above, the WWAN 102 may include a number of transceiver base stations 108. The WWAN 102 may be operated by a single or multiple network service providers, and the WWAN 102 (for example, all the transceiver base stations 108 within the WWAN 102) may conform to one or more wireless network types described above to provide communication coverage for the electronic devices 301.

Although WWAN 102 is described as a "Wide-Area" network, that term is intended herein also to incorporate wireless Metropolitan Area Networks (WMAN) and other similar technologies for providing coordinated service wirelessly over an area larger than that covered by typical WLANs. WWANs are also commonly referred to as "cellular" networks, since each base station 108 provides coverage for a cell. The term "cellular network", as used herein, is intended to refer to WWANs of any type using any network standard.

The WWAN 102 may further include a wireless network gateway 110 which provides an interface to a public network 124. The public network 124 includes the Internet and may additionally include one or more private networks or lines, a virtual private network, or any other suitable network.

In some cases, the system 100 may include a wireless connector system 120 behind a firewall 113. The wireless connector system 120 may be operated, for example, by an organisation or enterprise such as a corporation, university, wireless carrier or governmental department. The wireless connector system 120 may be part of an enterprise network (not shown), and may be configured to relay messages and/or other data to wireless device 301, for example in a push-email architecture. The wireless connector system 120 may, in some cases, connect to the wireless network gateway 110 or other interfaces for relaying messaging data to and from electronic devices 301.

The WLAN 104 includes a wireless network which, in some example embodiments, conforms to IEEE 802.11x standards (sometimes referred to as Wi-Fi) such as, for example, the IEEE 802.11a, 802.11b, 802.11g, or 802.11n standards. Other communication protocols may be used for the WLAN 104 in other example embodiments such as, for example, IEEE 802.16e (also referred to as Worldwide Interoperability for Microwave Access or "WiMAX"), or IEEE 802.20 (also referred to as Mobile Wireless Broadband Access). The WLAN 104 includes one or more wireless RF Access Points (AP) 114 (one of which is shown in FIG. 1) that collectively provide a WLAN coverage area.

The WLAN 104 may be a personal network of the user, an enterprise network, or a hotspot offered by an Internet service provider (ISP), a mobile network provider, or a property owner in a public or semi-public area, for example. The access points 114 are connected to an access point (AP) interface 116 which may connect to the public network 124. The AP interface 116 provides translation and routing services between the access points 114 and the network 124.

An electronic device 301 may alternatively connect to the network 124 using a computer, such as a desktop or a notebook computer, and a link such as a physical interface or short-range wireless communication interface (not shown). The physical interface may include one or combinations of an Ethernet connection, Universal Serial Bus (USB) connection, Firewire^{™} (also known as an IEEE 1394 interface) connection, or other serial data connection, via respective ports or interfaces of the mobile electronic device 301 and computer. The short-range wireless communication interface may be a personal area network (PAN) interface. A personal area network is a wireless point-to-point connection meaning no physical cables are required to connect the two end points. The short-range wireless communication interface may include one or a combination of an infrared (IR) connection such as an Infrared Data Association (IrDA) connection, a short-range radio frequency (RF) connection such as one specified by IEEE 802.15.1 or the Bluetooth^{™} special interest group, or IEEE 802.15.3a, also referred to as UltraWideband (UWB), or other PAN connection.

It will be appreciated that the above-described communication system 100 is provided for the purpose of illustration only, and that the above-described communication system 100 includes one possible communication network configuration of a multitude of possible configurations for use with the electronic devices 301. The teachings of the present application may be employed in connection with any other type of network and associated devices that are effective in implementing or facilitating wireless communication.

The system 100 further includes an administration server 132 for facilitating downloading of content by the electronic devices 301 and a third-party server 136 that hosts applications and application update for download to electronic devices 301. The system 100 may further include other servers 142.

In at least some example embodiments, the third-party server 136 may be configured to deliver content such as data including applications and application upgrades to the electronic devices 301. For example, the third-party server may host operating system upgrades, core device application upgrades, new applications (often colloquially referred to as "apps"), and upgrades to apps. For example, the core device applications may include, in some cases, messaging applications (email, SMS, MMS, IM, *etc*.), productivity applications (such as word processors, PDF viewers, spreadsheets, etc.), utilities applications, and/or media player applications. Apps may include a wide variety of OEM-developed or third-party developed applications, including games applications, social media applications, and others. In at least some example embodiments, the third-party server 136 may store the applications that are sent to the electronic devices 301. It will be understood that the third-party server 136 may include a plurality of servers. The servers may be in a server farm or similar architecture. The servers may be geographically distributed to provide for redundancy and increased availability.

In at least some example embodiments, the administration server 132 is configured to provide authorization to the electronic devices 301 to download applications or upgrades from the third-party server 136. That is, the administration server 132 may act as a coordinator for downloading of content between the electronic devices 301 and the third-party servers 136. In at least some example embodiments, the administration server 132 receives a request from an electronic device 301 to download content (an application or update) from the third-party server 136, and the administration server 132 determines whether to authorize that download. The administration server 132 may be configured to determine whether to authorize the download based upon an assessment or estimate of the quality of the connection available to the electronic device 301. That is, the administration server 132 may estimate whether the electronic device 301 is likely to encounter network congestion, particular if operating in a cellular network. While the administration server 132 may have no direct data from the carrier network regarding the conditions of the cellular network, in some cases the administration server 132 may have a set of predetermined rules that estimate or attempt to determine the likely cellular traffic conditions and, on that basis, whether to authorize the download request.

The administration server 132 is separate from, and under separate management and control than, the third-party server 136. In other words, the administration server 132 is not a direct gateway between the electronic devices 301 and the third-party server 136. The electronic device 301 may contact the third-party server 136 directly through the public network 124 in an attempt to download applications and updates. Accordingly, the electronic device OEM may have no control over the user experience with regard to downloading applications and updates under those circumstances. In accordance with the present application, the electronics device 301 are configured to first contact the administration server 132 for permission to attempt a download session with the third-party server 136.

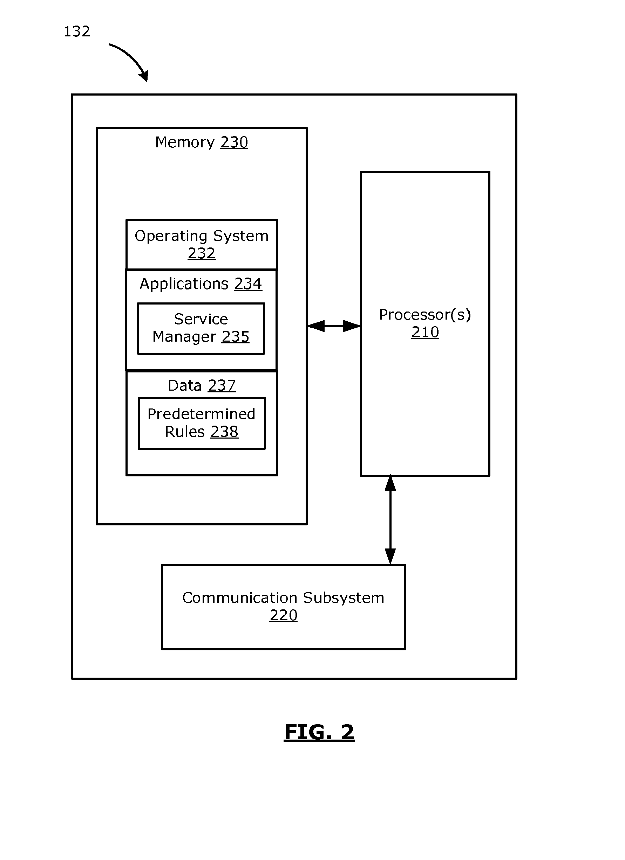

Example components and features of the administration server 132 will be discussed in greater detail below with reference to FIG. 2.

### Example Administration Server

Reference is next made to FIG. 2 which illustrates an example administration server 132. Although the discussion below describes a single server, it will be understood that the functions of the administration server 132 may be implemented across multiple networked servers, such as a server farm, or any other suitable computing architecture. The administration server 132 includes one or more processors 210 (such as a microprocessor) which control the overall operation of the administration server 132. The processor 210 may include a single processor with multiple cores, or multiple processors (with single or multiple cores). The processor 210 interacts with a communication subsystem 220 to perform communication functions via the network 124 with other systems, servers and/or devices such as the electronic devices 301 (FIG. 1). The processors 210 interact with additional components including a memory 230.

The processor 210 operates under stored program control and executes software stored in the memory 230. The software may include operating system software 232 and one or more additional applications 324, such as a service manager 235, to carry out specific functions of the administration server 132. For example, in at least some example embodiments, the service manager 235 may be configured to receive requests from electronic devices and to determine whether to authorize a download session between an electronic device and a third-party server.

The processor 210 may store data in the memory 230 such as for example data required by the administration server 132 to carry out its functionalities and maintain communication with the wireless network. While the memory 230 is illustrated as a single component, it may include multiple memory components of various types. For example, the memory 230 may include Random Access Memory (RAM), Read Only Memory (ROM), a Hard Disk Drive (HDD), a Solid State Drive (SSD), Flash Memory, or other types of memory. It will be appreciated that each of the various memory types will be best suited for different purposes and applications.

In at least some example embodiments, in order to facilitate a download session, the administration server 132 may generate an authorization message in response to receiving a request from an electronic device 301 to download content from the third-party server 136. To generate the authorization message the administration server 132 may apply one or more pre-determined rules 238 to determine whether to authorize the request or not. The one or more predetermined rules 238 include thresholds or tests that the administration server 132 may consider in determining whether to authorize the download. The thresholds or tests generally relate to determining an estimate of cellular traffic load. Upon determination, the authorization message is sent to the electronic device 301.

The authorization message may include information that permits or authorizes the electronic device 301 to establish a download session with the third-party server 136, or that denies permission and, optionally, informs the electronic device 301 of a time when it should reattempt or renew the request.

In at least some example embodiments, the one or more pre-determined rules 238 used by the administration server 132 in order to determine whether to grant permission for the download request may take into account, alone or in combination, the current time, the wireless network service provider (*i.e*. carrier), a transceiver base station identifier (*e.g*. a cell tower identifier), a current number of download requests received by the administration server 132 from electronic devices, a schedule of estimated network traffic conditions, bandwidth or network speed statistics provided by the electronic device in the request, or other such factors.

In at least some example embodiments, the administration server 132 may collect and analyze information relevant to one or more pre-determined rules 238. That is, the collected information may be assessed by one or more predetermined rules 238 and used to determine whether to authorize the download. In at least some example embodiments, the administration server 132 may record the number of concurrent requests for downloads from the electronic devices 301, perhaps within a window of time. The recorded information may be used by one or more pre-determined rules 238, for example, a rule may be based upon a threshold number of concurrent download requests to the administration server 132.

In at least some example embodiments, the one or more predetermined rules 238 (and associated information used by one or more pre-determined rules 238 *i.e.* information collected and/or recorded by the administration server 132) may be stored in the data area 237 of memory 230. In such example embodiments, the administration server 132, in generating the authorization message, may retrieve the pre-determined rules 238 (and associated information) from the memory 230. In other example embodiments, the administration server 132 may retrieve the predetermined rules 238 (and associated information) from another server, device and/or system. The server, device and/or system storing the pre-determined rules 238 (and associated information) may be remotely connected to the administration server 132.

In at least some example embodiments, the administration server 132 may generate and send a notification to the electronic device 301 specifying that a download session can be initiated, prior to receiving the request from the electronic device 301 to download content from the third-party server 136. For example, the administration server 132 may send the notification after it has determined that the conditions (based on the pre-determined rules 238 and associated information) for establishing a download session between the electronic device 301 and the third-party server 136 have been met. In some cases, the notification serves to make the electronic device 301 aware of the availability of certain applications or upgrades that may be downloaded. User selection of one or more of the available applications or upgrades (for example through a GUI on the electronic device), may prompt the electronic device 301 to transmit the request to the administration server 132, which then generates and responds with the authorization message.

In at least some example embodiments, the operating system 232 may perform some or all of the functions of the service manager 235. In other example embodiments, the functions or a portion of the functions of the service manager 235 may be performed by one or more other applications 234. Further, while the service manager 235 has been illustrated as a single block, the service manager 235 may include a plurality of software modules. In at least some example embodiments, these software modules may be divided among multiple applications.

The administration server 132 illustrated in FIG. 2 is an example server. In other example embodiments, servers may be used which have configurations and/or functions which are not specifically described herein.

### Example Electronic Device

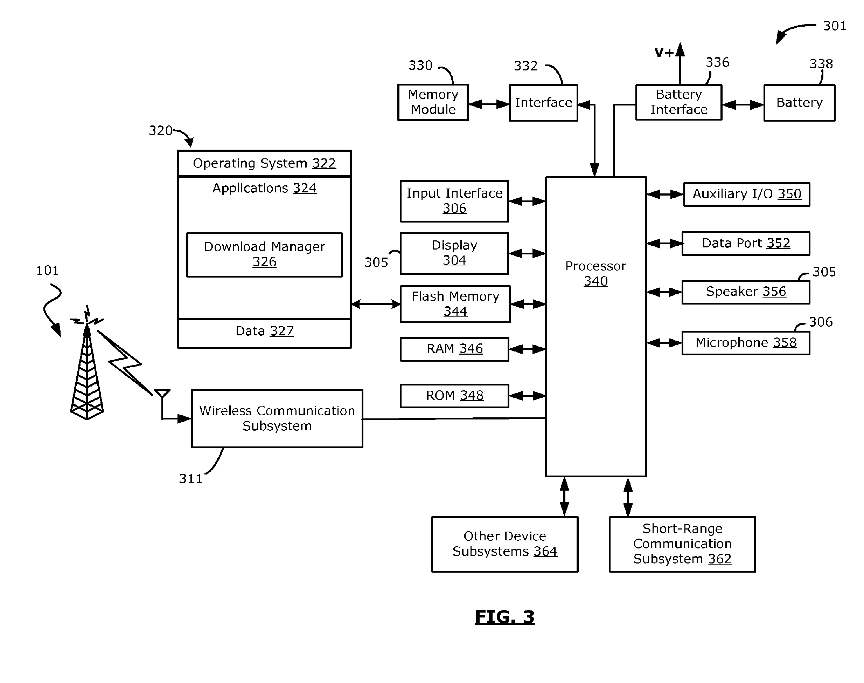

Reference is now made to FIG. 3 which illustrates an example electronic device 301. In the illustrated example embodiment, the electronic device 301 is a communication device, such as a mobile communication device. In at least some example embodiments, the electronic device 301 is a two-way communication device having data and voice communication capabilities, and the capability to communicate with other computer systems and servers, for example, via the network 124. Depending on the functionality provided by the electronic device 301, in various example embodiments the electronic device 301 may be a multiple-mode communication device configured for both data and voice communication, a mobile telephone such as a smartphone, a tablet computer such as a slate computer, a wearable computer such as a watch, a PDA (personal digital assistant) or a computer system. In other example embodiments, the electronic device 301 may be of a type not specifically listed above.

The electronic device 301 includes a housing (not shown) which houses components of the electronic device 301. Internal components of the electronic device 301 may be constructed on a printed circuit board (PCB). The electronic device 301 includes a controller including at least one processor 340 (such as a microprocessor) which controls the overall operation of the electronic device 301. The processor 340 interacts with device subsystems such as a wireless communication subsystem 311 for exchanging radio frequency signals with a wireless network 101 to perform communication functions. The processor 340 interacts with additional device subsystems including one or more input interfaces 306 (such as a keyboard, one or more control buttons, one or more microphones 358, and/or a touch-sensitive overlay associated with a touchscreen display), flash memory 344, random access memory (RAM) 346, read only memory (ROM) 348, auxiliary input/output (I/O) subsystems 350, a data port 352 (which may be a serial data port, such as a Universal Serial Bus (USB) data port), one or more output interfaces 305 (such as a display 304 (which may be a liquid crystal display (LCD)), one or more speakers 356, or other output interfaces 305), a short-range communication subsystem 362, and other device subsystems generally designated as 364. Some of the subsystems shown in FIG. 3 perform communication-related functions, whereas other subsystems may provide "resident" or on-device functions.

The electronic device 301 may include a touchscreen display in some example embodiments. The touchscreen display may be constructed using a touch-sensitive input surface connected to an electronic controller. The touch-sensitive input surface overlays the display 304 and may be referred to as a touch-sensitive overlay. The touch-sensitive overlay and the electronic controller provide a touch-sensitive input interface 306 and the processor 340 interacts with the touch-sensitive overlay via the electronic controller. That is, the touchscreen display acts as both an input interface 306 and an output interface 305.

The particular design of the wireless communication subsystem 311 depends on the wireless network 101 in which the electronic device 301 is intended to operate. The wireless network 101 may include the WWAN 102 (FIG. 1) or the WLAN 104 (FIG. 1). The electronic device 301 may send and receive communication signals over the wireless network 101 after the required network registration or activation procedures have been completed.

In at least some example embodiments, the auxiliary input/output (I/O) subsystems 350 may include an external communication link or interface, for example, an Ethernet connection. The auxiliary I/O subsystems 350 may include a pointing or navigational tool (input device) such as a clickable trackball or scroll wheel or thumbwheel, or a vibrator for providing vibratory notifications in response to various events on the electronic device 301 such as receipt of an electronic message or incoming phone call, or for other purposes such as haptic feedback (i.e. touch feedback).

In at least some example embodiments, the electronic device 301 also includes a removable memory module 330 (typically including flash memory) and a memory module interface 332. Network access may be associated with a subscriber or user of the electronic device 301 via the memory module 330, which may be a Subscriber Identity Module (SIM) card for use in a GSM network or other type of memory module for use in the relevant wireless network type. The memory module 330 may be inserted in or connected to the memory module interface 332 of the electronic device 301.

The electronic device 301 may store data 327 in an erasable persistent memory, which in one example embodiment is the flash memory 344. In various example embodiments, the data 327 may include service data having information required by the electronic device 301 to establish and maintain communication with the wireless network 101. The data 327 may also include user application data such as email messages, address book and contact information, calendar and schedule information, notepad documents, image files, and other commonly stored user information stored on the electronic device 301 by its user, and other data. The data 327 stored in the persistent memory (*e.g*. flash memory 344) of the electronic device 301 may be organized, at least partially, into a number of databases or data stores each containing data items of the same data type or associated with the same application. For example, email messages, contact records, and task items may be stored in individual databases within the electronic device 301 memory.

In at least some example embodiments, the electronic device 301 is provided with a service routing application programming interface (API) which provides an application with the ability to route traffic through a serial data (*i.e.,* USB) or Bluetooth® (Bluetooth® is a registered trademark of Bluetooth SIG, Inc.) connection to the host computer system using standard connectivity protocols.

The electronic device 301 also includes a battery 338 as a power source, which is typically one or more rechargeable batteries that may be charged, for example, through charging circuitry coupled to a battery interface 336 such as the serial data port 352. The battery 338 provides electrical power to at least some of the electrical circuitry in the electronic device 301, and the battery interface 336 provides a mechanical and electrical connection for the battery 338. The battery interface 336 is coupled to a regulator (not shown) which provides power V+ to the circuitry of the electronic device 301.

The short-range communication subsystem 362 is an additional optional component which provides for communication between the electronic device 301 and different systems or devices, which need not necessarily be similar devices. For example, the short-range communication subsystem 362 may include an infrared device and associated circuits and components, or a wireless bus protocol compliant communication mechanism such as a Bluetooth® communication module to provide for communication with similarly-enabled systems and devices.

A pre-determined set of applications that control basic device operations, including data and possibly voice communication applications may be installed on the electronic device 301 during or after manufacture. Additional applications and/or upgrades to an operating system 322 or software applications 324 may also be loaded onto the electronic device 301 through the wireless network 101, the auxiliary I/O subsystem 350, the data port 352, the short-range communication subsystem 362, or other suitable device subsystems 364. The downloaded programs or code modules may be permanently installed, for example, written into the program memory (*e.g*. the flash memory 344), or written into and executed from the RAM 346 for execution by the processor 340 at runtime.

The processor 340 operates under stored program control and executes software modules 320 stored in memory such as persistent memory; for example, in the flash memory 344. As illustrated in FIG. 3, the software modules 320 may include operating system software 322 and one or more additional applications 324, such as a download manager 326. In the example embodiment of FIG. 3, the download manager 326 is implemented as a separate stand-alone application 324, but in other example embodiments, the download manager 326 could be implemented as part of the operating system 322 or another application 324.

In at least some example embodiments, the download manager 326 may provide a platform for downloading applications (and application upgrades) from third-party servers 136 (FIG. 1). The platform application may provide the user with an environment to browse, download and update applications. The platform application may interface with the administration server 132 (FIG. 1) that coordinates the downloading of content from third-party servers 136. That is, the platform application may be used by a user to obtain available applications and permissions from the administration server 132 and to initiate actual download of a selected application or upgrade from the third-party server 136. Examples, of such platform applications include BlackBerry App World^{™} by Research in Motion, App Store^{™} by Apple, Inc., Amazon Appstore^{™} by Google Inc., etc. In some cases, the platform application may provide the user with the option of updating the operating system and/or core applications for the electronic device 301, as opposed to third-party applications.

Accordingly, in at least some example embodiments, the download manager 326 is configured to perform communication related functions with the administration server 132 (which may authorize a download session), and subsequently initiate a download session directly with the third-party server 136. For example, in at least some example embodiments, the download manager 326 may send a request to the administration server 132 to download content from a third-party server 136. In response to the request, the download manager 326 may receive an authorization message generated by the administration server 132 based on one or more pre-determined rules 238. The download manager 326 may then determine if the authorization message permits a download session with the third-party server 136. If the authorization message permits a download session, the download manager 326 may initiate the download session directly with the third-party server 136.

When initiating a download session directly with a third-party server 136, the download manager 326 establishes a download link directly with the third-party server 136. That is, during the download session, communication is between the download manager 326 and the third-party server 136, without any involvement of the administrative server 132. Accordingly, in at least some example embodiments, in initiating a download session directly with the third-party server 136, the download manager 326 may send a request for downloading content to the third-party server 136, and in response, receive the content from the third-party server 136.

In at least some example embodiments, the operating system 322 may perform some or all of the functions of the download manager 326. In other example embodiments, the functions or a portion of the functions of the download manager 326 may be performed by one or more other applications 324. Further, in at least some example embodiments, the functions of the download manager 326 may be provided by a plurality of software modules 320. In at least some example embodiments, these software modules 320 may be divided among multiple applications 324.

### Facilitating a Download Session

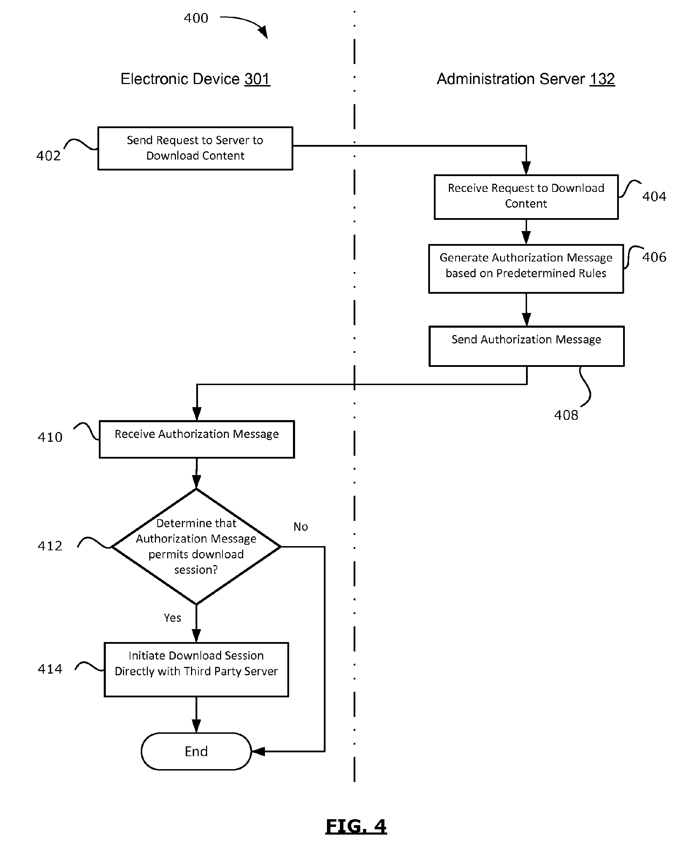

Reference will now be made to FIG. 4, in which an example method 400 of facilitating a download session is illustrated in flowchart form. Portions of the method 400 may be implemented by the electronic device 301 and portions may be implemented by the administration server 132. One or more applications or modules (such as the download manager 326) on the electronic device 301 may contain computer readable instructions for causing a processor 340 associated with the electronic device 301 to perform the electronic device-specific operations and one or more applications or modules (such as the service manager 235) on the administration server 132 may contain computer readable instructions for causing a processor 210 associated with the administration server 132 to perform the server-specific operations.

Any one or more operations of method 400 may, in at least some example embodiments, be provided by other systems, software applications or modules apart from those specifically discussed herein.

In operation 402, the electronic device 301 sends a request to the administration server 132 to download content from a third-party server 136. For example, the electronic device 301 may send an instruction to the administration server 132 requesting permission to download content from a third-party server 136.

In at least some example embodiments, the request is sent when a platform application for downloading applications from third-party servers 136 is accessed on the electronic device 301. As noted above, the platform application may provide a user of the electronic device 301 with an environment to browse, download and update operating system software or applications. The actual hosting of the software for download may be through the third-party server 136. The platform application sends the request to the administration server 132, and the administration server 312 replies with an authorization method indicating whether the electronic device 301 is permitted to download content from the third-party server 136 at the current time.

In at least some example embodiments, the request may be sent in response to receiving an instruction on the electronic device 301 to request the downloading of content from a third-party server 136. In at least some example embodiments, the instruction may be received when the platform application on the electronic device 301 is enabled. The instruction may be received, for example, from an input interface 306 associated with the electronic device 301. For example, the instruction may be received from a navigational input device such as a trackball, a trackpad or a touchscreen display, or a physical keyboard associated with the electronic device 301. In response to receiving such an instruction, the electronic device 301 may send a request to the administration server 132 to download content from a third-party server 136.

At operation 404, the administration server 132 receives the request from the electronic device 301 to download content from a third-party server 136. For example, the administration server 132 may receive the request from a platform application on the electronic device 301 via the wireless network 101.

At 406, the administration server 132 generates an authorization message by determining whether to authorize the request. The determination of whether to authorize the request is based on one or more pre-determined rules 238. The one or more pre-determined rules 238 define thresholds, tests, or factors the administration server 132 may consider in determining whether to authorize the request.

In one example embodiment, the determination of whether to authorize the request may include determining the type of data connection with which the electronic device 301 is operating. The electronic device 301 may be configured to report the type of data connection in its request message. The type may include, for example, a cellular connection over WWAN 102 (FIG. 1), a WiFi connection over WLAN 104 (FIG. 1), or a wired connection such as through serial bus connection to an Ethernet-connected computer. In one example, the predetermined rules on the administration server 132 may be that download sessions are permitted for all types of network connection except cellular connections. In another example, the administration server 132 may be configured to apply additional tests or rules in the case of a cellular connection to determine whether to authorize a download in that case. Other rules based on network data connection type may also be established.

In another example embodiment, the predetermined rule may be based upon the current time of day. Such a rule may be established to prevent or delay download requests at times and dates during which network congestion within a cellular network is predicted to be high. For example, the level of network congestion may be highest during work hours (for example, 9 a.m. to 5 p.m.) on a weekday and lowest during non-work hours early morning (for example, 12 a.m. to 6 a.m.), at least for particular geographic locations. For example, within business districts, the number of wireless network communications may be empirically higher during work hours than non-work hours. In another example, the number of wireless network communications may be highest along commuter corridors during morning and evening commute times. Peak hours are time periods when the quantity of data usage on the wireless network (particular cellular networks) is higher and the resulting congestion causes lower quality of service and delays during these periods. Off-peak hours are time periods when the transfer of data on the wireless networks is faster and more reliable because of the lower level of activity on the wireless network during these periods.

In some example embodiments, the time-of-day rule may define that the downloading of content may be permitted over wireless networks only during off-peak hours and not during peak hours. The definition of peak hours and off-peak hours may vary between geographic locations. In one example, the definition may be specific to a base station or network identifier. The administration server 132 may maintain a schedule or database defining the peak and off-peak times for each base station identifier, or IP address, or other geographically-associated identifiers. It will be understood that, in at least some example embodiments, the administration server 132 in generating the authorization message based on a time-of-day rule, may compare the current time and day of the request to the schedule or database of peak and off-peak time slots.

In yet another example embodiment, the administration server 132 may determine whether to authorize the download request based upon the identity of the wireless network service provider. The request from the electronic device 301 may include information or an identifier for the wireless network service provider (*i.e.* the wireless carrier). The rule on the administration server 132 may be at least partly dependent upon the identity of the wireless network service provider, in that some providers may offer a lower quality of service or download speed than others, at least during certain times of day in certain geographic locations where their network is known to have congestion issues. Accordingly, the identity of the wireless network service provider may be a factor in determining whether to grant permission for the download session.

In yet a further embodiment, the administration server 132 may take into account the subscription package provided by a wireless network service provider for the particular electronic device 301. Based on the terms of the subscription package, an electronic device 301 may be roaming when the request is sent. Roaming refers to the extension of connectivity service in a location that is different from the home location where the wireless service is registered. Roaming ensures that the electronic device 301 is maintained connected to a wireless network 101 when the electronic device 301 is outside the geographical coverage area of the home network for the wireless network service provider. Electronic devices 301 that are roaming are often charged premium rates for data usage. That is, users generally have to pay a premium rate for the use of wireless network services when their electronic devices 301 are roaming. Accordingly, in at least some example embodiments, the administration server 132 may take into account information provided by the electronic device 301 regarding its roaming status and/or its subscription package. In some cases, the electronic device 301 may be configured to report the nature of its subscription package (which may provide for flat rate data usage on roaming that makes it possible to perform application downloads despite roaming status).

In one example, if the electronic device 301 is roaming, the administration server 132 may be configured to not permit the downloading of content (as the user of the electronic device 301 is outside the home coverage area, and may be charged a premium rate for the transfer of data), while if the electronic device 301 is not roaming, the administration server 132 may permit (subject to additional predetermined rules) the downloading of content. In other cases, the rule may be further based on whether the subscription package charges premium rates for data roaming.

In another example embodiment, a transceiver base station capacity rule may include an estimate of the availability of channels on a transceiver base station 108 (FIG. 1). A transceiver base station 108 has a finite number of channels, and a transceiver base station 108 capacity is limited by the number of available channels. Although the administration server 132 does not have direct data from the wireless network regarding the network congestion or number of channels in use, it may have data from which it can estimate cellular traffic load. For example, the estimate may be based upon historical data gathered from electronic devices 301 reporting the base station identifier through which they have obtained service. Over time, the administration server 132 may build a database of information identifying the approximate load on an individual transceiver base station 108 (*e.g*. cellular tower). The estimate may be based on a time-of-day, day of the week, and/or number of electronic devices 301 currently active on all networks. In at least some example embodiments, a transceiver base station 108 may host multiple network service providers. In such example embodiments, the channels on the transceiver base station 108 may be allocated based on the particular network service provider hosted by the transceiver base station 108. Accordingly, the estimate may further be based upon the identity of the wireless network service provider.

In yet another example embodiment, the administration server 132 may determine whether to authorize the download based, in part, upon the number of concurrent download requests to the administration server 132. The administration server 132 may have a pre-defined threshold limit on the number of concurrent requests for permitting downloading of content from third-party servers 136. The pre-defined threshold limit may be a set number of requests within a period of time, above which, the downloading of content may not be permitted. In another variation, different pre-defined threshold limits may be based, in part, upon wireless network service provider, geographic location, base station identifier, *etc.* That is, if the administration server 132 receives more than the threshold number of requests within a period of time, then the administration server 132 may deny any subsequent requests for the downloading of content by electronic devices 301 until the number of requests within the time period falls below the threshold.

In at least some example embodiments, a bandwidth or speed rule may be applied in determining whether to authorize the download. In the request message, the electronic device 301 may provide a measurement or estimate of the bandwidth or connection speed of the device's current data connection. The rule applied by the administration server 312 may include a rate of data transfer at which the downloading of content may be permitted. The bandwidth rate may be defined as the bit rate (*i.e*. the number of bits that are conveyed per unit of time (for example, per second)). The electronic device 301 may estimate its bandwidth by performing a network speed test or by estimating bandwidth based upon current type of network connection. In another embodiment, the administration server 132, in determining the authorization message based on a bandwidth rate rule, may test the rate of data transfer between the electronic device 301 and the administration server 132. That is, the administration server 132 may analyze the network speed to determine if the rate of data transfer is higher than a minimum rate of data transfer.

The foregoing example predetermined rules 238 are examples only. Some implementations may apply one or more of the example rules. Some implementations may combine one or more rules into a compound rule. Yet other implementations may apply one or more of the rules in series.

It will be appreciated, that the administration server 132 may generate the authorization message by applying other pre-determined rules 238 not specifically described herein.

After the administration server 132 determines whether the request should be granted and the authorization message is generated, then at operation 408, the administration server 132 sends the authorization message to the electronic device 301. The authorization message may include information to establish a download session with the third-party server 136. That is, the authorization message includes information advising the device whether the download session is permitted or not.

In at least some example embodiments, where a session is not permitted, the information may specify that a download session may be initiated at a pre-defined time. That is, the information may indicate that the electronic device 301 may download content from the third-party server 136 after a set time. For example, if the authorization message is determined based on the time of day, and the server 132 determines that the request is made during a peak hour (*e.g*. during work hours), the information may specify that the download session may be initiated at the start of the off-peak hours.

In another example embodiment, where a session is not permitted, the information may specify that the electronic device 301 may renew or resubmit its request at or after a certain period of time. In this example, the electronic device 301 must still seek authorization from the administration server 132 for the download at the designated time, and the renewed request is then re-evaluated by the administration server 132.

At operation 410, the electronic device 301 receives the sent authorization message from the administration server 132.

In response to receiving the authorization message, the electronic device 301, at operation 412, determines if the authorization message permits a download session with the third-party server 136. That is, the electronic device 301 may check the information included in the authorization message to determine if the information permits or does not permit the downloading of content from the third-party server 136. If the authorization message does not permit a download session, in at least some example embodiments, the process may end. That is, the electronic device 301 may not establish a download session with the third-party server 301. In at least some example embodiments, where the authorization message does not permit a download session, the authorization message may include information specifying that a download session may be initiated at a pre-defined time. In such example embodiments, the download session may be initiated at the pre-defined time. In another example, the method 400 may be re-started at the pre-defined time. That is, the electronic device 301 may send a renewed request to the server 132 to download content from the third-party server at the pre-defined time to start the method 400. In at least some example embodiments, the method 400 may be continued at the pre-defined time. That is, the electronic device 301 may initiate a download session at the pre-defined time (*i.e*. operation 414) without re-starting the method 400.

In at least some example embodiments, if the authorization message permits a download session, the electronic device 301, at operation 414, initiates a download session directly with the third-party server 136. When initiating a download session directly with a third-party server 136, the electronic device 301 establishes a download link directly with the third-party server. That is, the electronic device 301 does not route communications through the administration server 132 and the download session is established with the third-party server 136. The administration server 132 does not exercise control over the electronic device 301 during initiation of the download session, and there is no more involvement of the administration server 132 during the downloading process.

In at least some example embodiments, the electronic device 301 may automatically initiate the download session directly with the third-party server in operation 414. That is, the electronic device 301 initiates the download session after determining that the authorization message permits the download session, without the need for further input from a user. However, in other example embodiments, further user input is required from a user via an input interface in order to initiate the download session. For example, after determining that the authorization message permits a download session, a prompt may be presented via an output interface (such as a display) to initiate a download session with the third-party server. When confirmation is received by a user via an input interface (such as a navigational input device), a download session is initiated with the third-party server 136.

In at least some example embodiments, the administration server 132 may pre-send a notification to the electronic device 301 specifying that a download session can be initiated, prior to receiving the request from the electronic device 301 to download content from the third-party server 136. For example, in at least some example embodiments, the administration server 132 may determine that a particular software update relevant to the electronic device 301 is available and that a download session between the electronic device 301 and the third-party server may be initiated based on analyzing one or more predetermined 238 rules and associated information. In at least some example embodiments, the notification may include a push notification. A push notification is a type of communication initiated by the administration server 132, as opposed to in reply to a request from the other party. The communication may include information relating to content on a third-party server 136 to which a user of an electronic device 301 may have subscribed. These notifications may be sent whenever new content relating to the subscribed content is available. For example, a user of an electronic device 301 may have downloaded an application from a third-party server 136. The administration server 132 may subsequently send a push notification to the electronic device 301 informing the user of availability of an upgrade to the application whenever the upgrade becomes available on the third-party server 136.

In at least some example embodiments, the push notification may only be sent by the administration server 132 when the conditions for establishing a download session have been met. That is, the push notification may be sent after the administration server 132 has determined based on analyzing one or more predetermined rules 238 and the associated information defining one or more predetermined rules 238 that a download session between the electronic device 301 and the third-party server 136 can be established. In such example embodiments, for example, even if an application upgrade may be available on a third-party server 136, the server 132 may not send a push notification for the application upgrade to the electronic device 301 until after the conditions for downloading content between the electronic device 301 and the third-party server 136 are met.

### Initiating a Download Session

As noted above, based on determining that the authorization message permits a download session with the third-party server 136, the electronic device 301 may initiate the download session directly with the third-party server 136. That is, a download link is established between the electronic device 301 and the third-party without any communication, control and/or involvement of the administration server 132. Example embodiments of initiating a download session will now be described.

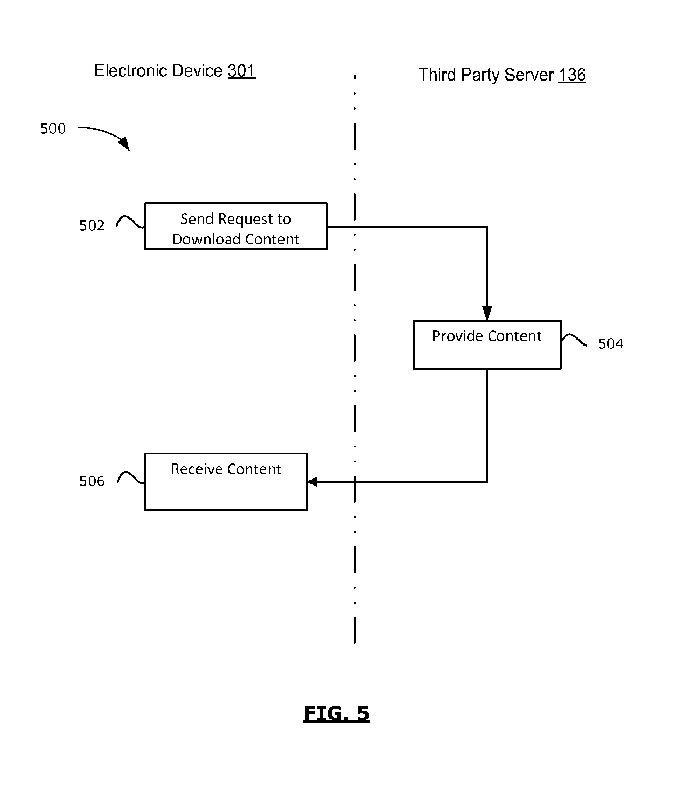

Referring now to FIG. 5, a flowchart of an example method 500 of initiating a download session is illustrated. The method 500 includes operations which may be implemented by the electronic device 301 and operations which may be implemented by the third-party server 136. One or more applications or modules (such as the download manager 326) on the electronic device 301 may contain computer readable instructions for causing a processor 340 associated with the electronic device 301 to perform the electronic device-specific features and one or more applications or modules on the third-party server 136 may contain computer readable instructions for causing a processor associated with the third-party server 136 to perform the third-party server-specific features.

Any one or more features of method 500 may, in at least some example embodiments, be provided by other systems, software applications or modules apart from those specifically discussed herein.

In at least some embodiments, the method 500 may be performed at operation 414 of the method 400 of FIG. 4.

The method 500 includes, at operation 502, the electronic device 301 sending a request for downloading content to the third-party server 136. For example, the electronic device 301 may send an instruction to the third-party server 136 requesting to download content. In some embodiments, the content may include an application, a binary update to an application, a binary update to operating system software or modules, or other such content.

In at least some example embodiments, the request may be sent automatically. That is, the electronic device 302 may sent the request for downloading content without the need for input from a user. For example, in at least some example embodiments, based on determining that the authorization message permits a download session, the electronic device 301 may automatically send a request for downloading content to the third-party server 136.

In at least some example embodiments, the request may be sent in response to receiving an instruction on the electronic device 301 to request the downloading of content (*i.e*. user input may be required). The instruction may be received, for example, from an input interface 306 associated with the electronic device 301. For example, the instruction may be received from a navigational input device such as a trackball, a trackpad or a touchscreen display, or a physical keyboard associated with the electronic device 301.

In response to receiving the request, the third-party server, at operation 504, retrieves and transmits the requested content. The electronic device 301 receives the content in operation 506. The received content may be in various forms including application files, executable installation files or modules, *etc.*

In at least some example embodiments, the downloaded content may be stored in the memory, for example, the flash memory 344, of the electronic device 301.

While the present application is primarily described in terms of methods, a person of ordinary skill in the art will understand that the present application is also directed to various apparatus such as a handheld electronic device and a server. The handheld electronic device and the server includes components for performing at least some of the example aspects and features of the described methods, be it by way of hardware components (such as the memory and/or the processor), software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present application.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

Example embodiments of the present application are not limited to any particular operating system, system architecture, mobile device architecture, server architecture, or computer programming language.

The various embodiments presented above are merely examples and are in no way meant to limit the scope of this application. Variations of the innovations described herein will be apparent to persons of ordinary skill in the art, such variations being within the intended scope of the present application. In particular, features from one or more of the above-described example embodiments may be selected to create alternative example embodiments including a sub-combination of features which may not be explicitly described above. In addition, features from one or more of the above-described example embodiments may be selected and combined to create alternative example embodiments including a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A method implemented by a processor (210) of a server (132), the method comprising:
receiving a request from an electronic device (301) to download content from a third-party server (136) over a wireless network connection;
generating an authorization message in response to the request based on applying one or more pre-determined rules (238) to the request, wherein the one or more pre-determined rules (238) are based on an estimate of wireless network traffic load; and
sending the authorization message to the electronic device (301) indicating whether the electronic device (301) is authorized to establish a download session with the third-party server (136).

2. The method of claim 1, wherein the one or more pre-determined rules (238) determine whether to authorize the request based on a time of day and a schedule of estimated wireless network traffic.

3. The method of any one of claims 1 or 2, wherein the one or more predetermined rules (238) determine whether to authorize the request based on a wireless network carrier identity.

4. The method of any one of claims 1 to 3, wherein the request includes a base station identifier and the one or more pre-determined rules (238) determine whether to authorize the request based on the base station identifier and an estimate of wireless network capacity.

5. The method of any one of claims 1 to 4, wherein the one or more predetermined rules (238) determine whether to authorize the request based on a count of current number of download requests from other electronic devices.

6. The method of claim 5, wherein the count of current number of download requests is based on download requests received from the other electronic devices using a same wireless carrier, in a same geographic area, or connected to a same transceiver base station (108).

7. The method of any one of claims 1 to 6, wherein generating the authorization message includes determining that the request from the electronic device (301) is denied, and further including determining a time at which the electronic device (301) is permitted to renew the request, and wherein the authorization message includes the time at which the electronic device (301) is permitted to renew the request.

8. The method of any one of claims 1 to 7, wherein the content comprises an application or an application upgrade.

9. The method of any one of claims 1 to 8, wherein the wireless network connection comprises a cellular connection.

10. A server (132) comprising:
one or more processors (210);
memory (230);
a communication subsystem (220); and
a module executable by the one or more processors (210) to configure the one or more processors (210) to perform the method of any one of claims 1 to 9.

11. A computer-readable medium storing computer-executable instructions which, when executed, configure a processor to perform the method of any one of claims 1 to 9.

12. A method implemented by a processor (340) of an electronic device (301), the method comprising:
sending a request to a server (132) over a wireless network connection to download content from a third-party server (136);
receiving an authorization message from the server (132), the authorization message being generated based on applying one or more pre-determined rules (238) to the request, wherein the one or more pre-determined rules (238) are based on an estimate by the server (132) of wireless network traffic load;
determining that the authorization message permits a download session with the third-party server (136); and
initiating the download session directly with the third-party server (136).

13. An electronic device (301) comprising:
a processor (340);
memory (344);
a communication subsystem (311); and
a module executable by the processor (340) to configure the processor (340) to perform the method of claim 12.
